# EUROPEAN PATENT APPLICATION

(11) **EP 2 107 700 A1**
(43) Date of publication of application: **07.10.2009**
(21) Application number: 07831488.7
(22) Date of filing: 09.11.2007
(51) Int. Cl.: H04B 7/26, H04H 20/57, H04H 60/11, H04H 60/91, H04J 1/00, H04J 11/00

(54) **MOBILE COMMUNICATION SYSTEM, TERMINAL, BASE STATION DEVICE, AND DATA COMMUNICATION METHOD**

(30) Priority: 26.01.2007 JP 2007016643
(71) Applicant: NEC Corporation, Minato-ku Tokyo 108-8001 (JP)
(72) Inventor: SHIMOBAYASHI, Shinya, Minato-ku Tokyo 108-8001 (JP)
(74) Representative: Glawe, Delfs, Moll
(86) International application number: PCT/JP2007/071757
(87) International publication number: WO 2008/090661

(57) **Abstract**

A base station transmits multimedia broadcast/multicast service data on the resource block allocated to a multimedia broadcast/multicast service to a number of terminals. The terminal extracts multimedia broadcast/multicast service data from the resource block allocated to the multimedia broadcast/multicast service, which is contained in the signal received from the base station, and measures reception quality of the resource block. The base station transmits auxiliary data on another resource block when the reception quality of the resource block has deteriorated in any of the terminals. The terminal in which the quality of the received data is low extracts auxiliary data contained in the received signal and synthesizes the data with the multimedia broadcast/multicast service data.

## Description

### Technical Field

The present invention relates to a downstream data communication in a mobile communication system, and more particularly, to a data communication for distributing the same data to a plurality of terminals.

### Background Art

Recently, a next generation mobile communication system has been studied extensively as a 3 GPP (3rd Generation Partnership Project)-LTE (Long Term Evolution). An OFDM (Orthogonal Frequency Division Multiplexing) system is determined as a common downlink communication scheme of a 3 GPP-LTE system.

In an OFDM scheme, a band of the system is split into several subcarriers, and a base station transmits independent data on each subcarrier to terminals. Allocation of subcarriers to each terminal is performed by the unit of the resource block in which a plurality of subcarriers are grouped into clusters.

The resource block to be used in the transmission of data transmitted individually to each terminal from a base station is determined on the basis of reception quality measured at each terminal. In detail, terminals feedback the base station with a CQI (Channel Quality Indicator) including information of the reception quality of pilot sequence transmitted from the base station. The resource block to be used in the transmission of data transmitted individually to each terminal is selected on the basis of reception quality based on CQI.

However, 3 GPP-LTE includes MBMS (Multimedia Broadcast/Multicast Service) which distributes the same data to a number of terminals from a base station. MBMS distributes the same data simultaneously to a plurality of terminals by using the same resource block.

### Disclosure

### Technical Problem

In MBMS, it is impossible to select a resource block on the basis of the reception quality of each terminal, since, as mentioned previously, data is simultaneously distributed to a number of terminals by the same resource block. The downlink receiving condition varies in each terminal, and therefore, a certain terminal has high reception quality while another terminal has low reception quality. Moreover, even through a terminal outputs low reception quality, the resource block allocated to MBMS is continuously used. As a result, a low reception quality state caused due to the terminal with low reception quality is continued.

A method is disclosed in that reception quality is improved by adopting a point-to-point transmission mode in a terminal in which the reception quality is low (see Japanese Patent Application Laid-open No. 2006-135956). However, this method has failed to show efficient use of resources.

It is an object of the present invention to provide a mobile communication system and a data communication system capable of improving reception quality at terminals in a service for simultaneously distributing same data to a number of terminals while utilizing resources with high efficiency, and a terminal thereof and a base station.

### Technical Solution

To accomplish the above object of the present invention, there is provided according to an exemplary embodiment a mobile communication system for performing data communication of multimedia broadcast/multicast service by using a resource block obtained by dividing a radio resource of a downlink,
wherein the mobile communication system includes
a plurality of terminals for selecting a resource block allocated to a multimedia broadcast/multicast service from among the resource blocks contained in a radio received signal, extracting multimedia broadcast/multicast service data from the selected resource block, measuring reception quality of the selected resource block, and extracting auxiliary data for enhancing reception quality of the multimedia broadcast/multicast service data from another resource block contained in the radio received signal and synthesizing the extracted auxiliary data to the multimedia broadcast/multicast service data when the reception quality has deteriorated, and
a base station for selecting a resource block allocated to the multimedia broadcast/multicast service, transmitting the multimedia broadcast/multicast service data on the selected source block to the terminals via a radio transmitting system, and transmitting the auxiliary data on another resource block when the reception quality of the resource block allocated to the multimedia broadcast/multicast service has deteriorated in any of the terminals.

According to one exemplary embodiment of the present invention, there is provided a terminal for use in a mobile communication system, wherein the mobile communication system
uses a resource block obtained by dividing a radio resource of a downlink in a multimedia broadcast/multicast service,
allows a base station to transmit multimedia broadcast/multicast service data carried on the resource block allocated to multimedia broadcast/multicast service to a plurality of terminals through a radio transmitting system,
allows the terminals to extract the multimedia broadcast/multicast service data from the resource block allocated to the multimedia broadcast/multicast service from among the resource blocks contained in a radio received signal sent from the base station, and estimate reception quality of the resource block,
transmits auxiliary data carried on another resource block for improving reception quality of the multimedia broadcast/multicast service data from the base station when the reception quality of the resource block allocated to the multimedia broadcast/multicast service has deteriorated in any of the terminals, and
allows the terminal with the deteriorated reception quality to extract the auxiliary data from another resource block contained in the received signal and synthesize the auxiliary data with the multimedia broadcast/multicast service data,
wherein the terminal includes
first receiving means for extracting multimedia broadcast/multicast service data from the resource block allocated to a multimedia broadcast/multimedia service from among resource blocks contained in a radio received signal sent from the base station,
quality estimation means for measuring reception quality of the resource block allocated to the multimedia broadcast/multicast service,
second receiving means for extracting auxiliary data for improving reception quality of the multimedia broadcast/multicast service from another resource block contained in the received signal when the reception quality measured by the quality estimation means has deteriorated, and
synthesizing means for synthesizing the auxiliary data extracted by the second receiving means with the multimedia broadcast/multicast service data extracted by the first receiving means.

According to one exemplary embodiment of the present invention, there is provided a base station for use in a mobile communication system, wherein the mobile communication system
uses a resource block obtained by dividing a radio resource of a downlink in a multimedia broadcast/multicast service,
allows a base station to transmit multimedia broadcast/multicast service data carried on the resource block allocated to multimedia broadcast/multicast service to a plurality of terminals through a radio transmitting system,
allows the terminals to extract the multimedia broadcast/multicast service data from the resource block allocated to the multimedia broadcast/multicast service from among the resource blocks contained in a radio received signal sent from the base station, and estimate reception quality of the resource block,
transmits auxiliary data carried on another resource block for improving reception quality of the multimedia broadcast/multicast service data from the base station when the reception quality of the resource block allocated to the multimedia broadcast/multicast service has deteriorated in any of the terminals, and
allows the terminal with the deteriorated reception quality to extract the auxiliary data from another resource block contained in the received signal and synthesize the auxiliary data with the multimedia broadcast/multicast service data,
wherein the base station includes
transmission deciding means for deciding whether to transmit the auxiliary data for improving reception quality of the multimedia broadcast/multicast service data, on the basis of the deterioration of reception quality in any of terminals of the resource block allocated to the multimedia broadcast/multicast service, and
mapping means for permitting the resource block allocated to the multimedia broadcast/multicast service data to carry multimedia broadcast/multicast service data, and additionally permitting the resource block allocated to the auxiliary data to carry the auxiliary data if it is decided, by the transmission deciding means, to transmit the auxiliary data, and transmitting the multimedia broadcast/multicast service data and the auxiliary data to a plurality of terminals via a radio transmission system.

According to one exemplary embodiment of the present invention, there is provided a data communication method in a mobile communication system for performing a multimedia broadcast/multicast service by using a resource block obtained by dividing a radio resource of a downlink, wherein the data communication method
allows a base station to transmit multimedia broadcast/multicast service data carried on the resource block allocated to multimedia broadcast/multicast service to a plurality of terminals through a radio transmitting system,
allows the terminals to extract the multimedia broadcast/multicast service data from the resource block allocated to the multimedia broadcast/multicast service from among the resource blocks contained in a radio received signal sent from the base station, and estimate reception quality of the resource block,
transmits auxiliary data carried on another resource block for improving reception quality of the multimedia broadcast/multicast service data from the base station when the reception quality of the resource block allocated to the multimedia broadcast/multicast service has deteriorated in any of the terminals, and
allows the terminal with the deteriorated reception quality to extract the auxiliary data from another resource block contained in the received signal and synthesize the auxiliary data with the multimedia broadcast/multicast service data.

### Description of Drawings

FIG. 1 is a block diagram showing the configuration of 3 GPP-LTE mobile communication system according to an exemplary embodiment of the present invention;
FIG. 2 illustrates the configuration of a resource block in a downlink resource;
FIG. 3 is a block diagram showing the arrangement of devices in 3 GPP-LTE mobile communication system according to an exemplary embodiment of the present invention; and
FIG. 4 is a flowchart showing the operation of 3 GPP-LTE mobile communication system according to an exemplary embodiment of the present invention.

### Best Mode for Carrying Out the Invention

An exemplary embodiment of the present invention will be explained hereinafter with reference to the accompanying drawings.

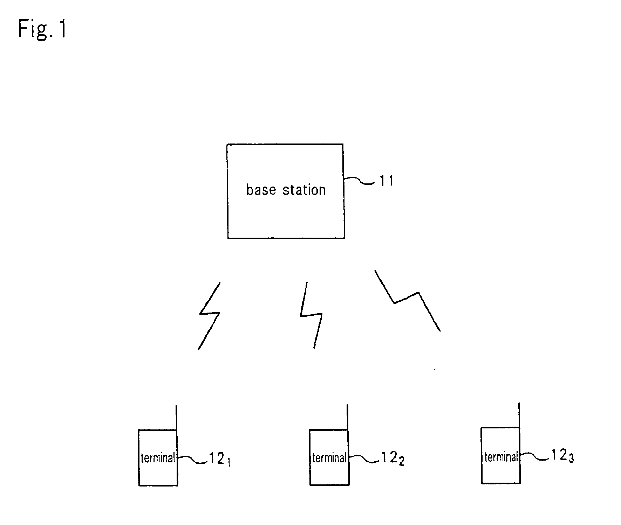

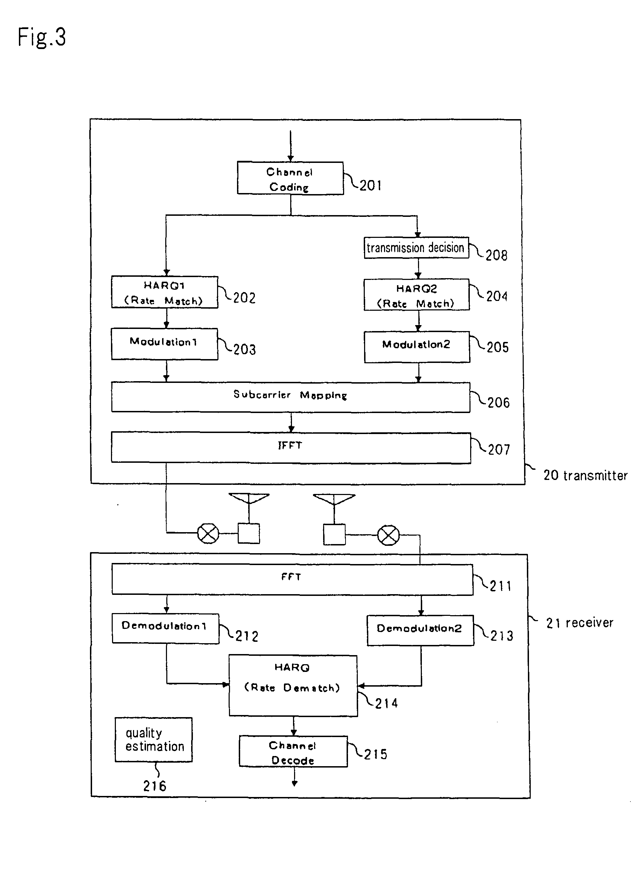

FIG. 1 is a block diagram showing the configuration of a 3 GPP-LTE mobile communication system according to an exemplary embodiment of the present invention. Referring to FIG. 1, 3 GPP-LTE mobile communication system includes base station 11 and terminals 12₁ to 12₃.

Base station 11 communicates with the terminals in cells thereof over a wireless channel. An MBMS distributes the same MBMS data to a number of terminals. Base station 11 may transmit, as auxiliary data, a part of MBMS data to the terminals if needed.

Terminals 12₁ to 12₃ existing within the cells of base station 11 receive MBMS data from base station 11. In addition, Terminals 12₁ to 12₃ may receive both MBMS data and auxiliary data from base station 11 and synthesize the received data if needed.

In the system shown in FIG. 1, base station 11 transmits MBMS data by the resource block allocated to MBMS. Terminals 12₁ to 12₃ monitor a pilot sequence to estimate reception quality of the resource block of MBMS, and request base station 11 to transmit auxiliary data when the reception quality has deteriorated. The judgment on the deterioration of the reception quality is made through a comparison with a predetermined threshold value. For example, if the received power level is lower than the threshold value, the received power can be judged as having deteriorated.

Base station 11 transmits auxiliary data by another resource block while continuing to transmit MBMS data by the resource block allocated to MBMS when a request for transmission of auxiliary data is made from any of the terminals 12. It is desirable to select a resource block with high reception quality for transmitting auxiliary data to terminal 12 which has made a request for transmission of auxiliary data. The judgment on the reception quality of the resource block is made through the comparison between the reception quality and a predetermined threshold value. The auxiliary data is a part of MBMS data. Terminal 12 which has made a request for transmission of auxiliary data receives both MBMS data and auxiliary data, and synthesizes the received data.

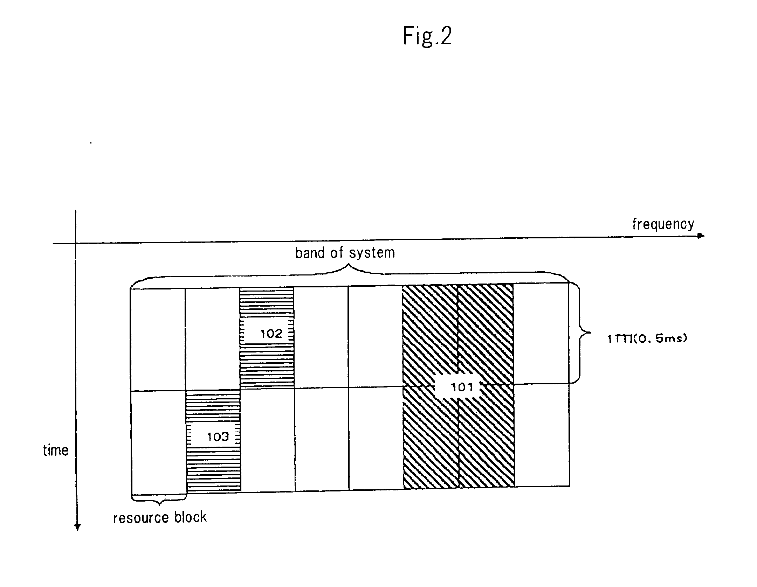

FIG. 2 illustrates the configuration of a resource block in a downlink resource, in which an example of the relationship between a resource block for MBMS and a resource block for individual data is shown.

Referring to FIG. 2, a band of the system is divided into subcarriers, and a plurality of resource blocks obtained by dividing a time axis by TTI (Transmission Timing Interval) of 0.5 milliseconds are shown. In data communication, resources are allocated by the unit of resource block.

Resource block 101 is one allocated to MBMS. Regardless of the reception quality at each of terminals 12₁ to 12₃., the same resource block is used consistently.

Resource blocks 102 and 103 are those having high reception quality selected in accordance with the CQI information notified from terminal 12, and used in the data to be transmitted individually to terminal 12. In the exemplary embodiment of the present invention, if terminal 12 shows low reception quality in receiving data by the resource block for MBMS, base station 11 transmits, for terminal 12, auxiliary data in the resource blocks for individual transmission, for example, resource blocks 102 and 103.

FIG. 3 is a block diagram showing the arrangement of devices in a 3 GPP-LTE mobile communication system according to an exemplary embodiment of the present invention. Referring to FIG. 3, transmitter 20 and receiver 21 are opposite to each other. Transmitter 20 transmits data in an OFDM scheme, and is contained in base station 11 of 3 GPP-LTE mobile communication system. Receiver 21 receives data in an OFDM scheme, and is contained in terminal 12 of a 3 GPP-LTE mobile communication system.

Transmitter 20 includes channel coding unit 201, first HARQ (Hybrid Automatic Repeat Request) unit 202, first modulation unit 203, second HARQ unit 204, second modulation unit 205, subcarrier mapping unit 206, inverse FFT (Fast Fourier Transform) unit 207, and transmission deciding unit 208.

Channel coding unit 201 performs channel coding on the data to be transmitted. In detail, channel coding unit 201 performs turbo coding with a coding rate of 1/3.

First and second HARQ units 202 and 204 perform a HARQ (Hybrid Automatic Repeat Request) re-transmission and rate match process on the data coded by channel coding unit 201. In detail, as a rate match process, first and second HARQ units 202 and 204 adjust coded bits so as to be received in the allocated resource block. During adjustment, a puncture or repetition process is properly carried out on the coded data. The puncture process aims to delete parity bits, and the repetition process repeatedly outputs the same bit.

In addition, it is desirable that, through an incremental redundancy process, the output of the rate match process carried out by second HARQ unit 204 contains, if possible, bits punctured in the rate match process performed by first HARQ unit 202.

First and second modulation units 203 and 205 modulate outputs of first and second HARQ units 202 and 204. In detail, first and second modulation units 203 and 205 carry out modulation processes in any modulation scheme of QPSK, 16QAM and 64QAM.

Subcarrier mapping unit 206 maps data modulated by the first and second modulation units 203 and 205 to an allocated resource block.

Inverse FFT unit 207 collectively transforms symbol data mapped on a frequency axis by subcarrier mapping unit 206 into symbols on a time axis through IFFT (Inverse Fast Fourier Transform) process.

Transmission deciding unit 208 decides whether to actually transmit auxiliary data when a request for transmission of auxiliary data is made from terminal 12.

For example, let's assume that a terminal has three classes of A, B and C which is priority-ranked in accordance with a subscription contract. The classes can be prioritized by subscription fees or the like. Then, when a request for transmission of auxiliary data is made from terminal 12 of class A, transmission deciding unit 208 performs a transmission scheduling process on another terminal in the priority level (e.g., medium) identical with that of individual data. In addition, when a request for transmission of auxiliary data is made from terminal 12 of class B, transmission deciding unit 208 performs a transmission scheduling process in the priority level (e.g., low) which is lower than that of individual data. Further, transmission deciding unit 208 performs no transmission process when a request for transmission of auxiliary data is made from the terminal of class C.

Referring back to FIG. 3, receiver 21 includes FFT unit 211, first demodulation unit 212, second demodulation unit 213, HARQ unit 214, channel decoding unit 215 and quality estimation unit 216.

FFT unit 211 transforms sample data received from transmitter 20 into symbol data on a frequency axis through FFT process.

First and second demodulation units 212 and 213 extract symbols of an allocated resource block from symbol data output from FFT 211 and demodulate the extracted symbols to produce a bit sequence. First demodulation unit 212 demodulates MBMS data, and second demodulation unit 213 demodulates auxiliary data. Only first demodulation unit 212 operate while only MBMS data is being transmitted from transmitter 20, and both first demodulation unit 212 and second demodulation unit 213 operates while MBMS data and auxiliary data are being transmitted from transmitter 20.

HARQ unit 214 performs a HARQ re-transmission and rate de-match process on the data sequence produced by first demodulation unit 212 when only first demodulation unit 212 is in operation. The rate de-match process results in restoration of the data to the state before it is rate-matched by transmitter 20.

Further, when both first and second demodulation units 212 and 213 are being operated, HARQ unit 214 performs a rate de-match process on both of the bit sequence produced by first demodulation unit 212 and the bit sequence produced by second demodulation unit 213, and synthesizes data by a HARQ buffer (not shown) to restore data to the state before it is rate-matched.

Channel decoding unit 215 performs a channel decoding process on the data restored by HARQ unit 214.

Quality estimation unit 216 measures reception quality of the resource block for MBMS, and makes a request for transmission of auxiliary data to base station 11 when the measured reception quality of the resource block is lower than a predetermined threshold value.

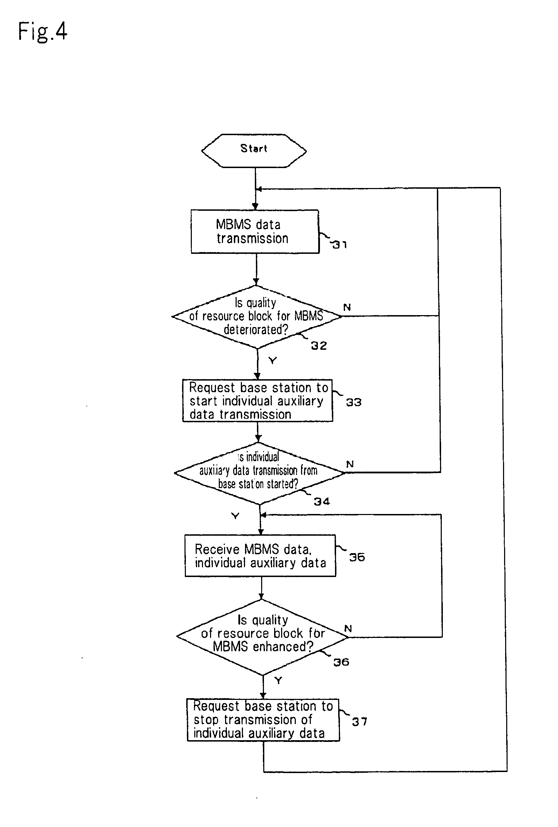

FIG. 4 is a flowchart showing the operation of a 3 GPP-LTE mobile communication system according to an exemplary embodiment of the present invention. Referring to FIG. 4, MBMS data transmitted from base station 11 is received in terminals 12₁ to 12₃ (step 31). Subsequently, terminals 12₁ to 12₃ monitor the pilot sequence being transmitted from base station 11 to estimate reception quality of the resource block, and judge whether the reception quality of the resource block being used in the transmission of MBMS data has deteriorated (step 33). If it is judged that the reception quality of the resource block for MBMS has not deteriorated, the process returns to step 31 to be repeated. If it is judged that the reception quality of the resource block for MBMS has deteriorated, terminal 12 makes a request for transmission of auxiliary data to base station 11 (step 33).

Upon receipt of the request for transmission of auxiliary data from terminal 12, base station 11 investigates the class of terminal 12 and determines whether to start transmission of auxiliary data in accordance with the class (step 34). In the previously discussed example, base station 11 starts transmission of auxiliary data in the priority level of medium when a request is made from terminal 12 of class A. In addition, base station 11 starts transmission of auxiliary data in the priority level of low when a request is made from terminal 12 of class B. Further, upon receipt of a request from the terminal of class C, base station 11 destroys the request and performs no transmission of auxiliary data, and the process returns to step 31.

When transmission of auxiliary data starts, terminal 12 which has made the request for transmission receives both MBMS data and auxiliary data, synthesizes the data, and carries out a decoding process (step 35).

Terminal 12 which has made the request for transmission of auxiliary data monitors enhancement of reception quality of the resource block for MBMS (step 36). If the reception quality shows no enhancement, the process returns to step 35 to repeat the process. If the reception quality is enhanced, terminal 12 makes a request for stoppage of transmission of auxiliary data to base station 11 (step 37). Upon receipt of the request for stoppage of transmission, base station 11 stops transmission of auxiliary data. The process returns to the state in which terminal 12 receives only MBMS data, when base station 11 has stopped transmission of auxiliary data.

As described so far, in the exemplary embodiment of the present invention, terminals 12₁ to 12₃ makes a request for transmission of auxiliary data to base station 11 when reception quality of MBMS data sent from base station 11 has deteriorated. Upon receipt of the request for transmission of auxiliary data from any of terminals 12, base station 11 transmits, as auxiliary data, a part of MBMS data by using a resource block showing high reception quality at terminal 12, while transmitting MBMS data by the resource block for MBMS. Terminal 12 synthesizes and decodes MBMS data and auxiliary data sent from base station 11. In MBMS which distributes the same data simultaneously to a plurality of terminals 12₁ to 12₃ by a common resource block for MBMS, base station 11 transmits auxiliary data for terminal 12 with low reception quality, and terminal 12 synthesizes auxiliary data to MBMS data to improve reception quality. As a result, resources can be utilized in an efficient manner while improving reception quality at each terminal 12₁ to 12₃.

While the present invention has been described with reference to the exemplary embodiment in which the number of resource blocks for MBMS is larger than that of resource blocks for auxiliary data, the invention is not restricted to such exemplary embodiment only. As another example, the number of resource blocks for MBMS can be the same as that of resource blocks for auxiliary data.

In addition, the present invention has been described with reference to the exemplary embodiment in which auxiliary data is transmitted to a single terminal 12, however, the invention is not restricted only to such exemplary embodiment. As another example, auxiliary data can be transmitted commonly to a number of terminals. In detail, auxiliary data can be transmitted commonly to a number of terminals belonging to the same class.

In addition, the present invention has been described with reference to the exemplary embodiment in which whether to transmit auxiliary data is determined in accordance with the class of terminal 12 which has made a request for transmission of auxiliary data, however, the invention is not restricted only to such an exemplary embodiment.

As another example, it may be possible to decide whether to transmit auxiliary data on the basis of the points given to each of terminals 121 to 123 according to class levels. In this case, upon receipt of request for transmission of auxiliary data from terminal 12 of a certain class, base station 11 adds up points of that class. When the value of the added points exceeds a predetermined threshold value, base station 11 starts the transmission of auxiliary data. For instance, under the assumption that class A has 10 points, class B has 5 points, and class C has 1 point, it is preferable to start transmission of auxiliary data when the sum of values obtained by multiplying the number of terminals 12 of each class which have made requests for transmission of auxiliary data and points of those classes exceeds a threshold value. In addition, it would be preferable to adaptively vary the threshold value in accordance with the degree of congestion of a downlink resource. This may overcome drawbacks in which the congestion of the downlink resource increases due to control for enhancing the reception quality of a terminal, since the resource to be used in enhancing the reception quality of the terminal varies in accordance with the degree of congestion. In detail, it may be possible to lower the threshold value for judging the deterioration of reception quality when the downlink resource is congested. As a result, transmission of auxiliary data is suppressed during the congestion period of the downlink resource.

In addition, the present invention has been described with reference to the exemplary embodiment in which turbo coding with a coding rate of 1/3 is employed in the channel coding process, however, the invention is not restricted only to such an exemplary embodiment, and a coding method which allows HARQ would be preferable.

In addition, the present invention has been described with reference to the exemplary embodiment in which terminal 12 makes a request for starting and stoppage of transmission of auxiliary data to base station 11, however, the invention is not restricted only to such an exemplary embodiment. As another example, base station 11 may decide starting and stoppage of transmission of auxiliary data on the basis of the CQI periodically notified from terminals 12₁ to 12₃.

In addition, the present invention has been described with reference to the exemplary embodiment in which the bit punctured in the MBMS data rate match process performed by second HARQ unit 204 for auxiliary data transmission has remained unpunctured by using the incremental redundancy process. However, the invention is not restricted only to such an exemplary embodiment. As another example, it may be possible to use, in the rate match process performed by second HARQ unit 204, a parameter completely identical with that in the rate match process performed by first HARQ unit 202, and the bit string which is completely identical with that transmitted by the resource block for MBMS can be transmitted by the resource block for auxiliary data.

While the present invention has been described with reference to particular embodiments thereof, it is not limited to the specially described exemplary embodiments. It will be understood by those skilled in the art that various changes in the claimed constitution or details of the invention may be made without departing from the scope of the invention.

This application claims priority based on Japanese Patent Application No. 2007-016643 filed on Jan. 26, 2007, the disclosure of which is incorporated herein by reference.

## Claims

1. A mobile communication system for performing data communication of multimedia broadcast/multicast service by using a resource block obtained by dividing a radio resource of a downlink, the mobile communication system comprising:
a plurality of terminals for selecting a resource block allocated to a multimedia broadcast/multicast service from among the resource blocks contained in a radio received signal, extracting multimedia broadcast/multicast service data from the selected resource block, measuring reception quality of the selected resource block, and extracting auxiliary data for enhancing the reception quality of the multimedia broadcast/multicast service data from another resource block contained in the radio received signal and synthesizing the extracted auxiliary data with the multimedia broadcast/multicast service data when the reception quality has deteriorated; and
a base station for selecting a resource block allocated to the multimedia broadcast/multicast service, transmitting the multimedia broadcast/multicast service data on the selected source block to the terminals via a radio transmitting system, and transmitting the auxiliary data on another resource block when the reception quality of the resource block allocated to the multimedia broadcast/multicast service has deteriorated in any of the terminals.

2. A mobile communication system of claim 1, wherein the terminals make a request for transmission of the auxiliary data to the base station when the reception quality of the resource block allocated to the multimedia broadcast/multicast service has deteriorated, and
the base station transmits, upon receipt of the request for transmission of auxiliary data from any of the terminals, the auxiliary data by using a resource block showing high reception quality at the terminal which has made the request for transmission of auxiliary data.

3. The mobile communication system of claim 1 or claim 2, wherein the terminal measures the reception quality of each of the resource blocks and periodically notifies reception quality information to the base station, and
the base station decides whether to transmit the auxiliary data on the basis of the reception quality information notified from the terminal.

4. The mobile communication system of claim 1, wherein the downlink uses an OFDM communication scheme, and
in the transmission of the auxiliary data,
the base station performs a rate match process and a modulation process respectively on each unit of the multimedia broadcast/multicast service data and the auxiliary data, maps the multimedia broadcast/multicast service data and the auxiliary data to the allocated resource blocks, respectively, and performs an IFFT (Inverse Fast Fourier Transform) process collectively on the mapped data and transmits the data, and
the terminal performs an IFFT process on the signal received from the base station, performs a demodulation process on the multimedia broadcast/multicast service data and the auxiliary data mapped in the obtained data, and performs a rate de-match process and a synthesizing process on the data.

5. The mobile communication system of claim 1, wherein classes of terminals are defined into a plurality of levels, and each of the terminals belongs to any of the classes, and
the base station decides whether to transmit the auxiliary data on the basis of the class of the terminal in which the reception quality has deteriorated.

6. The mobile communication system of claim 5, wherein the classes of terminals are predetermined with point values, and
the base station adds up the point values of the terminals with low reception quality for every class of terminals, and transmits, if the sum of the point values exceeds a predetermined point threshold value, auxiliary data for the terminal of the class in which the sum of the point values exceeds the point threshold value.

7. The mobile communication system of claim 6, wherein the base station adaptively varies the point threshold value in accordance with the availability condition of a radio resource of the downlink.

8. A terminal for use in a mobile communication system, wherein the mobile communication system
uses a resource block obtained by dividing a radio resource of a downlink in a multimedia broadcast/multicast service,
allows a base station to transmit multimedia broadcast/multicast service data carried on the resource block allocated to multimedia broadcast/multicast service to a plurality of terminals through a radio transmitting system,
allows the terminals to extract the multimedia broadcast/multicast service data from the resource block allocated to the multimedia broadcast/multicast service from among the resource blocks contained in a radio received signal sent from the base station, and estimate reception quality of the resource block,
transmits auxiliary data carried on another resource block for improving the reception quality of the multimedia broadcast/multicast service data from the base station when the reception quality of the resource block allocated to the multimedia broadcast/multicast service has deteriorated in any of the terminals, and
allows the terminal with the deteriorated reception quality to extract the auxiliary data from another resource block contained in the received signal and synthesize the auxiliary data with the multimedia broadcast/multicast service data,
the terminal comprising:
first receiving means for extracting multimedia broadcast/multicast service data from the resource block allocated to a multimedia broadcast/multimedia service from among resource blocked contained in a radio received signal sent from the base station;
quality estimation means for measuring reception quality of the resource block allocated to the multimedia broadcast/multicast service;
second receiving means for extracting auxiliary data for improving reception quality of the multimedia broadcast/multicast service from another resource block contained in the received signal when the reception quality measured by the quality estimation means has deteriorated; and
synthesizing means for synthesizing the auxiliary data extracted by the second receiving means with the multimedia broadcast/multicast service data extracted by the first receiving means.

9. A base station for use in a mobile communication system, wherein the mobile communication system
uses a resource block obtained by dividing a radio resource of a downlink in a multimedia broadcast/multicast service,
allows a base station to transmit multimedia broadcast/multicast service data carried on the resource block allocated to multimedia broadcast/multicast service to a plurality of terminals through a radio transmitting system,
allows the terminals to extract the multimedia broadcast/multicast service data from the resource block allocated to the multimedia broadcast/multicast service from among the resource blocks contained in a radio received signal sent from the base station, and estimate the reception quality of the resource block,
transmits auxiliary data carried on another resource block for improving the reception quality of the multimedia broadcast/multicast service data from the base station when the reception quality of the resource block allocated to the multimedia broadcast/multicast service has deteriorated in any of the terminals, and
allows the terminal with the deteriorated reception quality to extract the auxiliary data from another resource block contained in the received signal and synthesize the auxiliary data with the multimedia broadcast/multicast service data,
the base station comprising:
transmission deciding means for deciding whether to transmit the auxiliary data for improving the reception quality of the multimedia broadcast/multicast service data, on the basis of the deterioration of the reception quality in any of terminals of the resource block allocated to the multimedia broadcast/multicast service; and
mapping means for permitting the resource block allocated to the multimedia broadcast/multicast service data to carry multimedia broadcast/multicast service data, and additionally permitting the resource block allocated to the auxiliary data to carry the auxiliary data if it is decided, by the transmission deciding means, to transmit the auxiliary data, and transmitting the multimedia broadcast/multicast service data and the auxiliary data to a plurality of terminals via a radio transmission system.

10. A data communication method in a mobile communication system for performing a multimedia broadcast/multicast service by using a resource block obtained by dividing a radio resource of a downlink, the data communication method comprising:
allowing a base station to transmit multimedia broadcast/multicast service data carried on the resource block allocated to multimedia broadcast/multicast service to a plurality of terminals through a radio transmitting system,
allowing the terminals to extract the multimedia broadcast/multicast service data from the resource block allocated to the multimedia broadcast/multicast service from among the resource blocks contained in a radio received signal sent from the base station, and estimate reception quality of the resource block,
transmitting auxiliary data carried on another resource block for improving the reception quality of the multimedia broadcast/multicast service data from the base station when the reception quality of the resource block allocated to the multimedia broadcast/multicast service has deteriorated in any of the terminals, and
allowing the terminal with the deteriorated reception quality to extract the auxiliary data from another resource block contained in the received signal and synthesize the auxiliary data with the multimedia broadcast/multicast service data.
